# EUROPEAN PATENT SPECIFICATION

(11) **EP 4 522 303 B1**
(45) Date of publication and mention of the grant of the patent: **25.11.2026**
(21) Application number: 23729167.9
(22) Date of filing: 09.05.2023
(51) Int. Cl.: B01D 19/00, B04C 5/04, F24D 19/08

(54) **DEVICE FOR SEPARATING GAS FROM A VECTOR FLUID IN A CIRCUIT OF A THERMAL SYSTEM**
VORRICHTUNG ZUR TRENNUNG VON GAS AUS EINER VEKTORFLÜSSIGKEIT IN EINEM KREISLAUF EINES THERMISCHEN SYSTEMS
DISPOSITIF DE SÉPARATION DE GAZ D'UN FLUIDE VECTEUR DANS UN CIRCUIT D'UN SYSTÈME THERMIQUE

(30) Priority: 12.05.2022 WO PCT/IB2022/054420
(43) Date of publication of application: 19.03.2025
(73) Proprietor: Caleffi S.p.A., 28010 Fontaneto d'Agogna Novara (IT)
(72) Inventor: CALEFFI, Marco, 28010 Fontaneto D'Agogna, Novara (IT)
(74) Representative: Luppi Intellectual Property S.r.l.
(86) International application number: PCT/IB2023/054794
(87) International publication number: WO 2023/218350

(56) References cited:
- US-A- 4 369 047
- US-A- 4 428 839
- US-A- 5 028 318
- US-A1- 2011 185 894
- US-A1- 2014 243 571
- US-A1- 2015 151 220

## Description

### Background of the invention

The present invention relates to a device for separating gas from a vector fluid, intended to be used in a circuit of a thermal system.

### Prior art

In a heating and/or cooling system, the heat is typically conveyed, through a hydraulic circuit, by a vector fluid. Inside the vector fluid (usually water), gas may however be present; the latter (typically air), in particular, can have various negative effects in terms of efficiency, noise, safety and durability of the components of a system.

It is often difficult to prevent the presence of gas inside the vector fluid, for example considering the water that commonly circulates inside a circuit of a thermal system, it often contains air inside, because the latter can derive not only from the air dissolved in the filling or topping up cold water but also from the air not expelled during the filling phase of the system. Further, it is possible that air enters even during the operation of the system itself.

For this reason, devices and/or constructional methods are used for evacuating gas inside these pipes. In particular, devices are known which allow the gas contained within a fluid flowing through a hydraulic circuit to be evacuated by placing the vector fluid itself in a swirling motion, for example, the device described in the French patent application FR2043048A5.

Patent application FR2043048A5 in fact describes a device for separating gas from a liquid which comprises two chambers, one lower and the other upper, partially separated by a dividing wall provided with a passage opening. The lower chamber, in particular, is provided with an inlet and an outlet for the liquid, arranged so that, also thanks to the shape of the lower chamber, the liquid generates a swirling motion inside the lower chamber itself. In this way, part of the gas separates from the liquid, forming gas bubbles which will accumulate in an area in the centre of the vortex. Lastly, the bubbles thus generated rise to the upper chamber, flowing through the passage opening, and reach an automatic vent valve which allow the gas bubbles to be evacuated.

However, at present, the devices for separating gas from a vector fluid are sized to evacuate only a part of the gas which flow through the piping, and, therefore, several passages through the device for separating gas are required before evacuating most of the gas. Another gas separation device is disclosed in US5028318A.

It would therefore be desirable to improve the current devices for separating gas from a vector fluid to allow all or almost all the amount of gas flowing through a circuit of a thermal system to be evacuated in a single passage, while ensuring at the same time easy installation along the piping of a circuit of a thermal system.

US2011/185894A1 discloses a cyclone for separating gas from a gas laden liquid stream by pressure reduction of the liquid stream. The cyclone has a cylindrical casing, having a tangentially directed inlet arrangement for the gas laden liquid stream, a lower outlet line for liquid and an upper outlet line for vapor and gas.

### Objects of the invention

An object of the present invention is to propose a device for separating gas from a vector fluid which can evacuate all or almost all the amount of gas flowing through a circuit of a thermal system in a single passage.

A further aspect is to have the device easily assembled with the piping of a circuit of a thermal system.

### Brief description of the invention

These objects are achieved by a device for separating gas from a vector fluid according to the first claim.

The preamble of the first claim refers to US2011/185894A1.

### Brief description of the drawings

The invention will be better understood with reference to the attached drawings which illustrate an exemplifying and non-limiting embodiment thereof, in which:
Fig.1 is a perspective view of a device for separating gas from a vector fluid according to the invention;
Fig.2 is a top view of the device of Fig.1;
Fig.3 is a perspective view in partial section of the device of Fig.1;
Fig.4 is an exploded partial section view of the device of Fig.1;
Fig.5 is a perspective view of a realization variant of the device for separating gas from a vector fluid of Fig.1;
Fig.6 is a perspective view of another realization variant of the device for separating gas from a vector fluid of Fig.1.
Fig.7 is another partial section view of the device of Fig.1.

### Detailed description of the invention

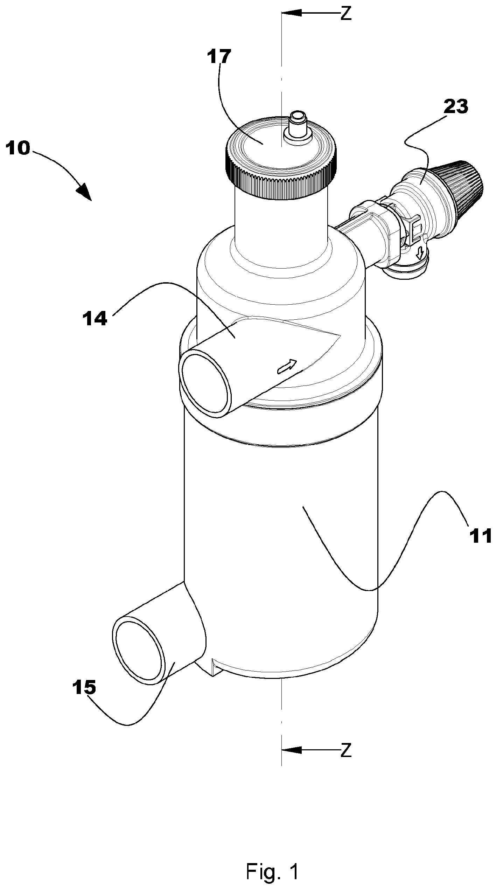

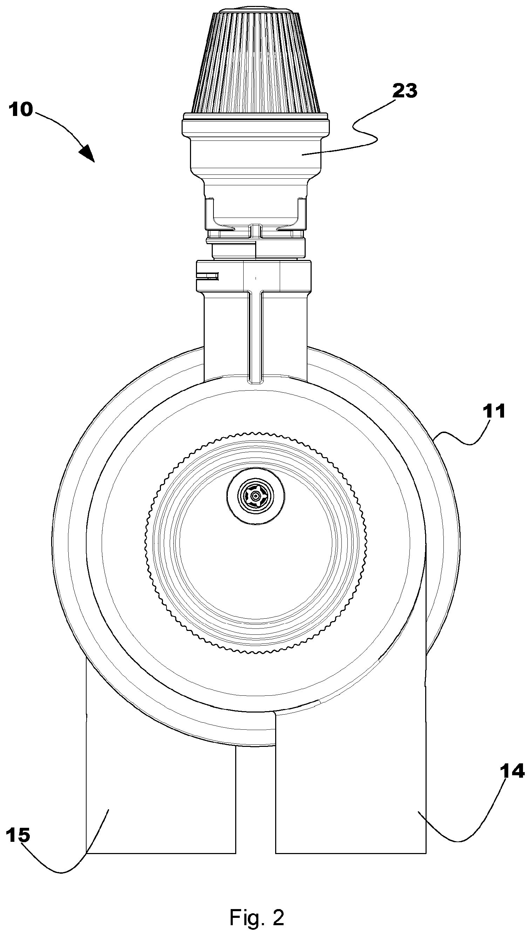

The general features of the present invention will be illustrated below through the exemplifying and non-limiting embodiment of Figs.1-4.

The illustrated device for separating gas from a vector fluid, indicated generically by 10, is intended to be installed in a circuit of a thermal system.

The device 10 has a body 11 inside which there is a cylindrical chamber, formed (with reference to the operating position) by an upper section 12, provided with a vector fluid inlet 14 connected, during use, to an inlet pipe (not shown), and a lower section 13, provided with a vector fluid outlet 15 connected, in use, to an outlet pipe (not shown). These sections 12 and 13 are arranged along a same axis Z. In particular, the inner diameter of the upper section 12 is smaller than the inner diameter of the lower section 13.

As clearly visible in the figures, the inlet 14 is arranged in the upper part of the body 11 of the device 10 whereas the outlet 15 is arranged in the lower part of the body 11 of the device 10 at the bottom 24 of the lower section 13.

Both the inlet 14 and the outlet 15 of the vector fluid are arranged offset with respect to the Z axis and, in particular, are positioned substantially tangentially to the sections 12, 13 of the cylindrical chamber of the body 11.

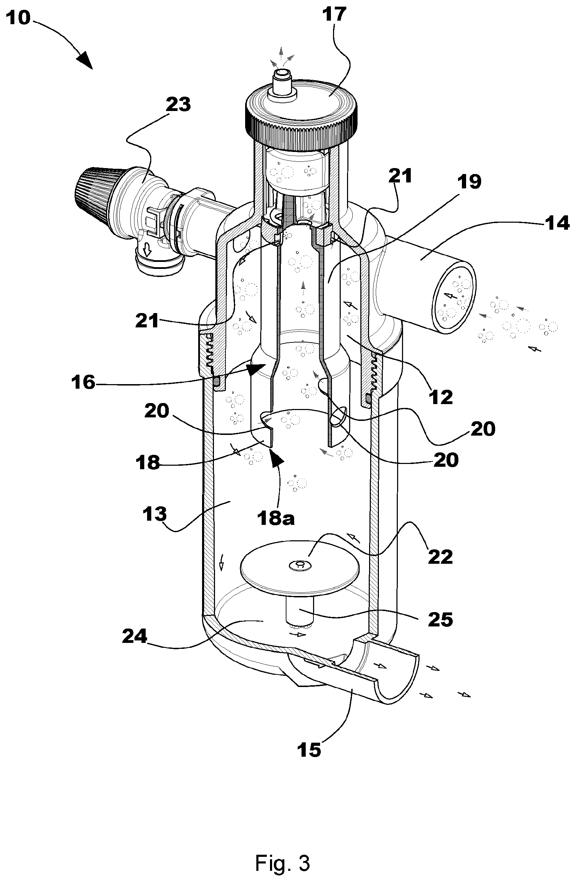

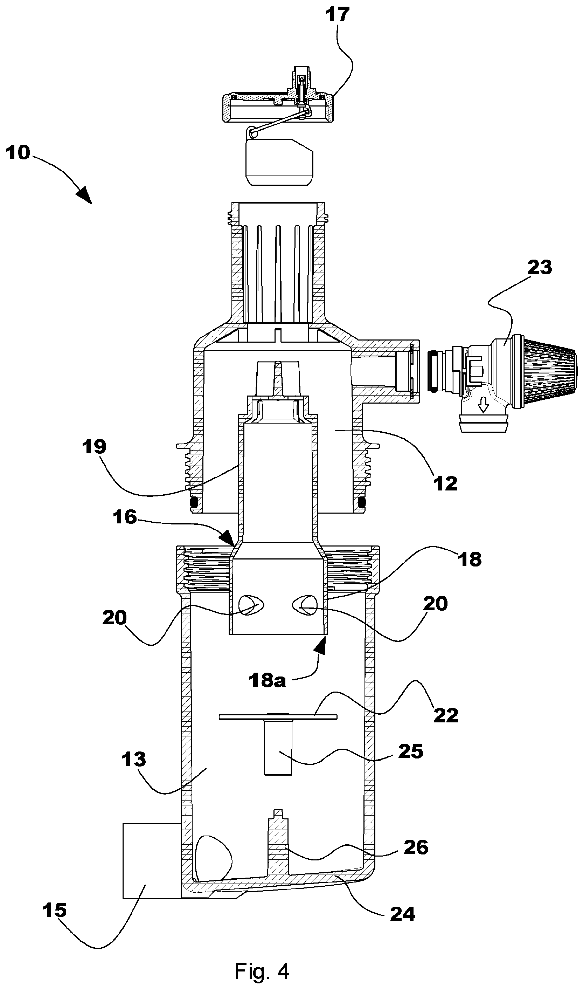

Inside the upper section 12, as shown in Figs.3,4, a gas collecting tube 16 is located coaxially, communicating upperly with an automatic gas vent valve 17 of known type and lowerly with the lower section 13.

The tube 16, in detail, has an end portion 18, at the lower section 13, having a greater diameter than that of the remaining portion 19 of the tube 16 and gradually connected to the latter. The end portion 18 of the tube 16 has a series of through openings 20 in the shape of circular holes, arranged, in particular, in an annular manner. The tube 16 is further provided, at the remaining portion 19, with upper passages 21 between the outside and the inside of the tube itself to convey the gas which accumulates in the upper part of the upper section 12 to the vent valve 17.

Otherwise, the lower section 13 has centrally, near and upstream of the outlet 15 and in a higher position with respect to this outlet 15, an intercepting disc 22 provided with a stem 25 fixed to a central pin 26 which is in turn fixed to the bottom 24 of the lower section 13.

The edge 18A of the end portion 18 of the tube 16 is spaced away from the intercepting disc 22 according to a predetermined distance H.

For a high efficiency of the device, the aforesaid distance H is between 0.5 cm and 15 cm.

Again, for high efficiency of the device, the ratio between the diameter D1 of the inner cylindrical chamber of the body 11 at the intercepting disc 22 and the diameter D2 of the intercepting disc 22 must not be greater than 5.

Lastly, the body 11 has a safety valve 23, located in the upper section 12, to discharge the vector fluid in the event of overpressure of the vector fluid itself inside the device 10.

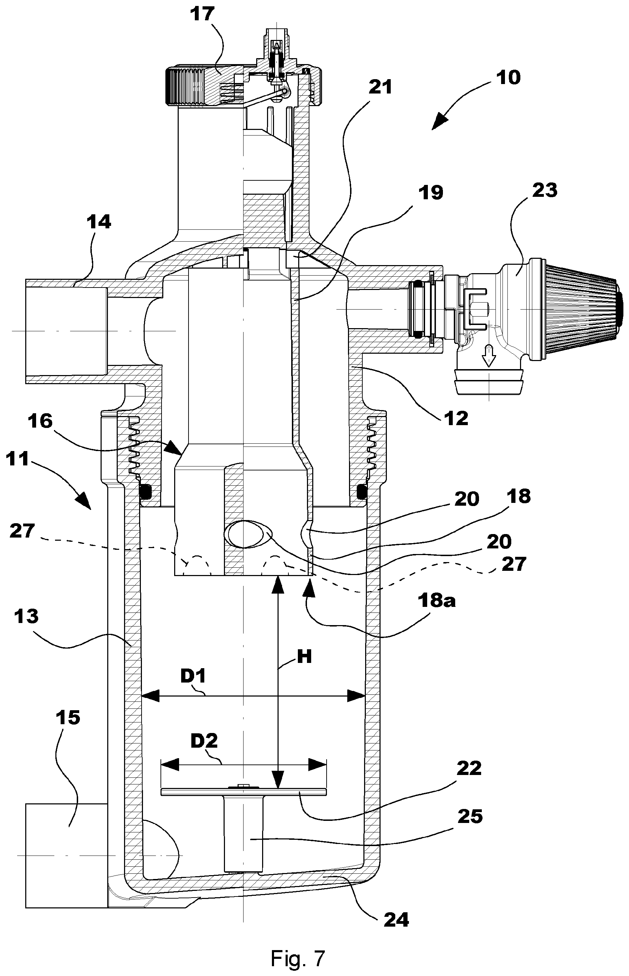

Recesses 27 indicated in broken lines in Fig.7 can be made along the edge 18A of the end portion 18 of the tube 16.

The operation of the device 10 is schematized in Fig.3.

The vector fluid enters the device 10 through the inlet 14. Given the offset position of this inlet 14, the vector fluid takes on a swirling motion inside the sections 12, 13 which envelops the tube 16.

In particular, the swirling motion of the vector fluid, containing gas, determines the separation of the gas from the vector fluid and the confinement of the gas, in the form of bubbles, in a central area of the vortex.

It occurs that the gas bubbles thus produced enter the gas collecting tube 16 both through the openings 20 present on the end portion 18 and through the end portion 18 itself, and through the recesses 27 where provided. In this way, a great amount of gas rises to the vent valve 17, being protected inside the tube 16 from the flow of the vector fluid outside the tube 16. Further, as previously mentioned, also the gas bubbles which accumulate in the upper part of the upper section 12 are conveyed to the vent valve 17 thanks to the passages 21 with which the remaining portion 19 of the tube 16 is provided, further facilitating the rise of the gas to the vent valve 17.

Between the edge 18A of the tube 16 and the intercepting disc 22, a central part of the vector fluid in a swirling motion is formed having a high amount of gas. The intercepting disc 22 prevents this central part of the vector fluid with a high amount of gas from continuing towards the outlet 15 and therefore the gas bubbles of this central part of vector fluid can rise inside the tube 16 towards the gas vent valve 17.

From the outlet 15 vector fluid thus flows out, which is substantially free of gas or with a minimum, not significant amount of gas.

Thanks to the aforesaid features, the device 10 has a high gas evacuation capacity and, in this way, can evacuate all or almost all the amount of gas passing through the circuit of the thermal system in a single passage although maintaining small dimensions, so as to make the device 10 easy to assemble with the piping of a circuit of a thermal system.

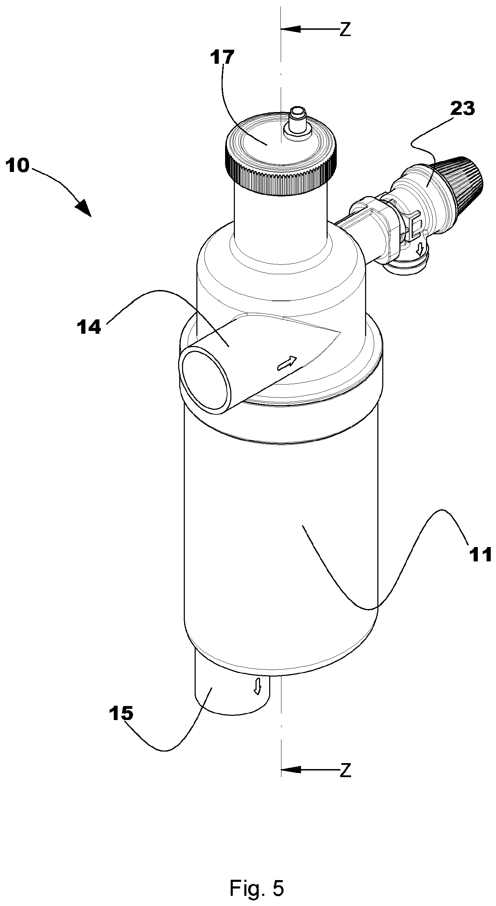

In Fig.5, the outlet 15 of the device 10, instead of being arranged in an offset manner with respect to the Z axis and tangential with respect to the cylindrical sections 12, 13, is arranged in the direction of the Z axis in an offset manner with respect to the same axis.

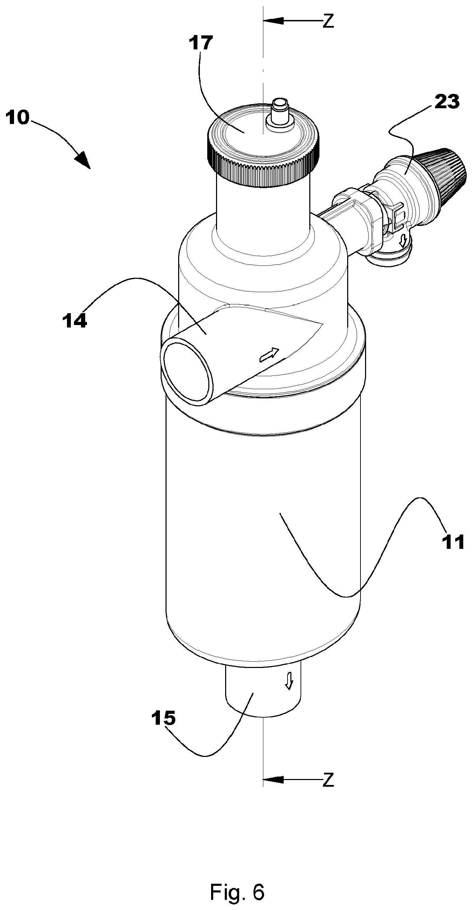

In Fig.6, on the other hand, the outlet 15 is arranged along the Z axis coaxially with respect to the same axis.

Configuration variants and dimensional ratio variants of the components of the illustrated device are possible.

The shape and number of the through openings of the tube can be different from those illustrated. The openings can also be formed in other sections of the tube and not only in the terminal section. The tube can be of the same diameter along its entire length.

The upper and lower sections of the cylindrical chamber can have the same diameter or the upper section can have a greater diameter than the diameter of the lower section.

The safety valve can alternatively be placed in the lower section of the device body.

## Claims

1. Device (10) for separating gas from a vector fluid in a circuit of a thermal system, comprising a body (11) having a cylindrical chamber inside comprising, with reference to the operating position, an upper section (12) and a lower section (13) arranged along a same axis (Z) and being provided with an inlet (14) of a vector fluid at said upper section (12) and with an outlet (15) of a vector fluid at said lower section (13), wherein at least said inlet (14) of the vector fluid is arranged offset with respect to the axis (Z) of said sections (12,13) so that the vector fluid forms a swirling motion inside said sections (12,13), wherein in said upper section (12) a gas collecting tube (16) is located coaxially, communicating upperly with an automatic gas vent valve (17) and lowerly with said lower section (13), wherein outside said tube (16) and around said tube (16) a swirling motion of the vector fluid is formed and inside said tube (16) gas bubbles rise to the gas vent valve (17) for discharging the collected gas, wherein said lower section (13) has centrally, near and upstream of said outlet (15), an intercepting disc (22) which is spaced away from the lower edge (18A) of said tube (16) according to a predetermined distance (H), **characterized in that** said gas collecting tube (16) has a series of through openings (20) which put the outside of said tube (16) in communication with the inside of said tube (16) for the passage of the gas bubbles from the outside to the inside of said tube (16), wherein said openings (20) are formed in the end portion (18) of said tube (16) at said lower section (13), wherein said through openings (20) are arranged in an annular manner, wherein said tube (16) has, at the remaining portion (19), one or more **upper** passages (21) for conveying the gas which accumulates in the upper part of said upper section (12) towards said gas vent valve (17), wherein the gas bubbles enter said gas collecting tube (16) both through said openings (20) present on the end portion (18) of said tube (16) and through the end portion (18) itself, wherein said intercepting disc (22) prevents the central part of the vector fluid in a swirling motion that forms between the aforesaid edge (18A) of said tube (16) and said disc (22) to flow into the outlet area.

2. Separating device according to claim 1, wherein a series of recesses (27) is formed along said lower edge (18A) of said tube (16).

3. Separating device according to claim 1 or 2, wherein said predetermined distance between said lower edge (18A) of said tube (16) and said intercepting disc (22) is between 0.5cm and 15cm.

4. Separating device according to any one of the preceding claims, wherein the ratio between the diameter (D1) of said inner cylindrical chamber of said body (11) at said intercepting disc (22) and the diameter of said intercepting disc (22) must not be higher than 5.

5. Separating device according to any one of the preceding claims, wherein also said outlet (15) of the vector fluid is arranged offset with respect to the axis (Z) of said sections (12, 13).

6. Separating device according to claim **5,** wherein said inlet (14) and said outlet (15) of the vector fluid are arranged substantially tangential to said sections (12, 13).

7. Separating device according to any one of claims **1-4,** wherein said outlet (15) of the vector fluid is arranged in the direction of the axis (Z) in an offset manner with respect to the axis itself.

8. Separating device according to any one of claims **1-4,** wherein said outlet (15) of the vector fluid is arranged along the axis (Z) coaxially with the axis itself.

9. Separating device according to any one of the preceding claims, wherein said gas collecting tube (16) has an increase in diameter in the end portion (18) at said lower section (13) with respect to the diameter of said remaining portion (19) of said tube (16).

10. Separating device according to claim **9,** wherein in said tube (16) said end portion (18) of greater diameter and said remaining portion (19) of smaller diameter are gradually connected.

11. Separating device according to any one of the preceding claims, wherein the inner diameter of said upper section (12) is smaller than the inner diameter of said lower section (13).

12. Separating device according to any one of the preceding claims, wherein a safety valve (23) is located in one of said sections (12,13) of said cylindrical chamber of said body (11) for discharging the vector fluid in the event of overpressure of the vector fluid.

## Patentansprüche

1. Vorrichtung (10) zum Trennen von Gas von einem Vektorfluid in einem Kreislauf eines thermischen Systems, umfassend einen Körper (11), der eine zylindrische Kammer im Inneren aufweist, die, bezogen auf die Betriebsposition, einen oberen Abschnitt (12) und einen unteren Abschnitt (13) umfasst, die entlang einer gleichen Achse (Z) angeordnet sind, und mit einem Einlass (14) eines Vektorfluids an dem oberen Abschnitt (12) und mit einem Auslass (15) eines Vektorfluids an dem unteren Abschnitt (13) versehen ist, wobei mindestens der Einlass (14) des Vektorfluids versetzt in Bezug auf die Achse (Z) der Abschnitte (12, 13) angeordnet ist, sodass das Vektorfluid eine Wirbelbewegung innerhalb der Abschnitte (12, 13) bildet, wobei in dem oberen Abschnitt (12) ein Gassammelrohr (16) koaxial angeordnet ist, das oben mit einem automatischen Gasentlüftungsventil (17) und unten mit dem unteren Abschnitt (13) in Verbindung steht, wobei außerhalb des Rohrs(16) und um das Rohr (16) herum eine Wirbelbewegung des Vektorfluids ausgebildet wird und innerhalb des Rohrs (16) Gasblasen zu dem Gasentlüftungsventil (17) zum Ablassen des gesammelten Gases aufsteigen, wobei der untere Abschnitt (13) zentral, nahe und vorgelagert zu dem Auslass (15) eine Abfangscheibe (22) aufweist, die von der Unterkante (18A) des Rohrs (16) gemäß einem vorbestimmten Abstand (H) beabstandet ist, **dadurch gekennzeichnet, dass** das Gassammelrohr (16) eine Reihe von Durchgangsöffnungen (20) aufweist, die die Außenseite des Rohrs (16) mit der Innenseite des Rohrs (16) für den Durchgang der Gasblasen von der Außenseite zur Innenseite des Rohrs (16) in Verbindung setzen, wobei die Öffnungen (20) in dem Endabschnitt (18) des Rohrs (16) an dem unteren Abschnitt (13) ausgebildet sind, wobei die Durchgangsöffnungen (20) ringförmig angeordnet sind, wobei das Rohr (16) an dem verbleibenden Abschnitt (19) ein oder mehrere **obere** Durchgänge (21) zum Leiten des Gases, das sich im Oberteil des oberen Abschnitts (12) ansammelt, in Richtung des Gasentlüftungsventils (17) aufweist, wobei die Gasblasen in das Gassammelrohr (16) sowohl durch die Öffnungen (20), die an dem Endabschnitt (18) des Rohrs (16) vorhanden sind, als auch durch den Endabschnitt (18) selbst eintreten, wobei die Abfangscheibe (22) verhindert, dass der zentrale Teil des Vektorfluids in einer Wirbelbewegung, die sich zwischen der zuvor genannten Kante (18A) des Rohrs (16) und der Scheibe (22) bildet, in den Auslassbereich strömt.

2. Trennvorrichtung nach Anspruch 1, wobei eine Reihe von Aussparungen (27) entlang der Unterkante (18A) des Rohrs (16) ausgebildet ist.

3. Trennvorrichtung nach Anspruch 1 oder 2, wobei der vorbestimmte Abstand zwischen der Unterkante (18A) des Rohrs (16) und der Auffangscheibe (22) zwischen 0,5 cm und 15 cm liegt.

4. Trennvorrichtung nach einem der vorstehenden Ansprüche, wobei das Verhältnis zwischen dem Durchmesser (D1) der inneren zylindrischen Kammer des Körpers (11) an der Abfangscheibe (22) und dem Durchmesser der Abfangscheibe (22) nicht größer als 5 sein darf.

5. Trennvorrichtung nach einem der vorstehenden Ansprüche, wobei auch der Auslass (15) des Vektorfluids bezüglich der Achse (Z) der Abschnitte (12, 13) versetzt angeordnet ist.

6. Trennvorrichtung nach Anspruch **5,** wobei der Einlass (14) und der Auslass (15) des Vektorfluids im Wesentlichen tangential zu den Abschnitten (12, 13) angeordnet sind.

7. Trennvorrichtung nach einem der Ansprüche **1 bis 4,** wobei der Auslass (15) des Vektorfluids in Richtung der Achse (Z) bezüglich der Achse selbst versetzt angeordnet ist.

8. Trennvorrichtung nach einem der Ansprüche **1 bis 4,** wobei der Auslass (15) des Vektorfluids entlang der Achse (Z) koaxial zu der Achse selbst angeordnet ist.

9. Trennvorrichtung nach einem der vorstehenden Ansprüche, wobei das Gassammelrohr (16) in dem Endabschnitt (18) an dem unteren Abschnitt (13) eine Zunahme des Durchmessers in Bezug auf den Durchmesser des verbleibenden Abschnitts (19) des Rohrs (16) aufweist.

10. Trennvorrichtung nach Anspruch **9**, wobei in dem Rohr (16) der Endabschnitt (18) mit größerem Durchmesser und der verbleibende Abschnitt (19) mit kleinerem Durchmesser allmählich verbunden sind.

11. Trennvorrichtung nach einem der vorstehenden Ansprüche, wobei der Innendurchmesser des oberen Abschnitts (12) kleiner ist als der Innendurchmesser des unteren Abschnitts (13).

12. Trennvorrichtung nach einem der vorstehenden Ansprüche, wobei in einem der Abschnitte (12, 13) der zylindrischen Kammer des Körpers (11) ein Sicherheitsventil (23) zum Ablassen des Vektorfluids im Falle eines Überdrucks des Vektorfluids angeordnet ist.

## Revendications

1. Dispositif (10) permettant de séparer du gaz provenant d'un fluide vecteur dans un circuit d'un système thermique, comprenant un corps (11) présentant une chambre cylindrique à l'intérieur comprenant, en référence à la position de fonctionnement, une section supérieure (12) et une section inférieure (13) agencées le long d'un même axe (Z) et étant pourvu d'une entrée (14) d'un fluide vecteur au niveau de ladite section supérieure (12) et d'une sortie (15) d'un fluide vecteur au niveau de ladite section inférieure (13), dans lequel au moins ladite entrée (14) du fluide vecteur est agencée de manière décalée par rapport à l'axe (Z) desdites sections (12, 13) de sorte que le fluide vecteur forme un mouvement de tourbillon à l'intérieur desdites sections (12, 13), dans lequel dans ladite section supérieure (12) un tube collecteur de gaz (16) est situé de manière coaxiale, communiquant vers le haut avec une soupape d'évent de gaz automatique (17) et vers le bas avec ladite section inférieure (13), dans lequel à l'extérieur dudit tube (16) et autour dudit tube (16) un mouvement tournoyant du fluide vecteur est formé et à l'intérieur dudit tube (16) des bulles de gaz s'élèvent vers la soupape d'évent de gaz (17) pour évacuer le gaz collecté, dans lequel ladite section inférieure (13) présente au centre, près et en amont de ladite sortie (15), un disque d'interception (22) qui est espacé du bord inférieur (18A) dudit tube (16) selon une distance prédéterminée (H), **caractérisé en ce que** ledit tube collecteur de gaz (16) présente une série d'ouvertures traversantes (20) qui mettent l'extérieur dudit tube (16) en communication avec l'intérieur dudit tube (16) pour le passage des bulles de gaz de l'extérieur vers l'intérieur dudit tube (16), dans lequel lesdites ouvertures (20) sont formées dans la partie d'extrémité (18) dudit tube (16) au niveau de ladite section inférieure (13), dans lequel lesdites ouvertures traversantes (20) sont agencées d'une manière annulaire, dans lequel ledit tube (16) présente, au niveau de la partie restante (19), un ou plusieurs passages **supérieurs** (21) pour acheminer le gaz qui s'accumule dans la partie supérieure de ladite section supérieure (12) vers ladite soupape d'évent de gaz (17), dans lequel les bulles de gaz pénètrent dans ledit tube collecteur de gaz (16) à la fois par lesdites ouvertures (20) présentes sur la partie d'extrémité (18) dudit tube (16) et par la partie d'extrémité (18) elle-même, dans lequel ledit disque d'interception (22) empêche la partie centrale du fluide vecteur dans un mouvement tournoyant qui se forme entre ledit bord (18A) dudit tube (16) et ledit disque (22) de s'écouler dans la zone de sortie.

2. Dispositif de séparation selon la revendication 1, dans lequel une série d'évidements (27) est formée le long dudit bord inférieur (18A) dudit tube (16).

3. Dispositif de séparation selon la revendication 1 ou 2, dans lequel ladite distance prédéterminée entre ledit bord inférieur (18A) dudit tube (16) et ledit disque d'interception (22) est comprise entre 0,5 cm et 15 cm.

4. Dispositif de séparation selon l'une quelconque des revendications précédentes, dans lequel le rapport entre le diamètre (D1) de ladite chambre cylindrique interne dudit corps (11) au niveau dudit disque d'interception (22) et le diamètre dudit disque d'interception (22) ne doit pas être supérieur à 5.

5. Dispositif de séparation selon l'une quelconque des revendications précédentes, dans lequel également ladite sortie (15) du fluide vecteur est agencée de manière décalée par rapport à l'axe (Z) desdites sections (12, 13).

6. Dispositif de séparation selon la revendication **5,** dans lequel ladite entrée (14) et ladite sortie (15) du fluide vecteur sont agencées de manière sensiblement tangentielle auxdites sections (12, 13).

7. Dispositif de séparation selon l'une quelconque des revendications **1 à 4,** dans lequel ladite sortie (15) du fluide vecteur est agencée dans la direction de l'axe (Z) de manière décalée par rapport à l'axe lui-même.

8. Dispositif de séparation selon l'une quelconque des revendications **1 à 4,** dans lequel ladite sortie (15) du fluide vecteur est agencée le long de l'axe (Z) de manière coaxiale avec l'axe lui-même.

9. Dispositif de séparation selon l'une quelconque des revendications précédentes, dans lequel ledit tube collecteur de gaz (16) présente une augmentation en diamètre dans la partie d'extrémité (18) au niveau de ladite section inférieure (13) par rapport au diamètre de ladite partie restante (19) dudit tube (16).

10. Dispositif de séparation selon la revendication **9**, dans lequel dans ledit tube (16) ladite partie d'extrémité (18) de plus grand diamètre et ladite partie restante (19) de plus petit diamètre sont progressivement reliées.

11. Dispositif de séparation selon l'une quelconque des revendications précédentes, dans lequel le diamètre interne de ladite section supérieure (12) est inférieur au diamètre interne de ladite section inférieure (13).

12. Dispositif de séparation selon l'une quelconque des revendications précédentes, dans lequel une soupape de sûreté (23) est située dans l'une desdites sections (12, 13) de ladite chambre cylindrique dudit corps (11) pour évacuer le fluide vecteur en cas de surpression du fluide vecteur.
